# EUROPEAN PATENT APPLICATION

(11) **EP 4 287 677 A1**
(43) Date of publication of application: **06.12.2023**
(21) Application number: 22176968.0
(22) Date of filing: 02.06.2022
(51) Int. Cl.: H04W 12/50, H04W 12/122, H04W 12/0471

(54) **PUSH-BUTTON PROTOCOL**

(71) Applicant: Koninklijke Philips N.V., 5656 AG Eindhoven (NL)
(72) Inventor: BERNSEN, Johannes Arnoldus Cornelis, Eindhoven (NL)
(74) Representative: Philips Intellectual Property & Standards

(57) **Abstract**

Thus there is provided a method and device for performing a push-button protocol between a first and a second device. The method comprises sending, by the first device, a first message after receiving a first button press, listening for a second message until either a waiting time is over or until a third button press is received, whichever is earlier, proceeding to a secure phase of the push-botton protocol if one or more second messages have been received from only one device, and aborting the push button protocol if no second messages have been received or if second messages have been received from more than one device. In another case the method comprises listening for a first messages after receiving a first button press, sending, by the first device, a second message if a first message has been received, until either a waiting time is over or until a third button press, whichever is earlier, proceeding to the secure phase if one or more first messages have been received from only one device , and aborting the push button protocol if no second messages have been received or if second messages have been received from more than one device.

## Description

### FIELD OF THE INVENTION

The present invention relates to devices and methods for use in wireless networks, in particular those conforming to the IEEE 802.11 family of standards.

### BACKGROUND OF THE INVENTION

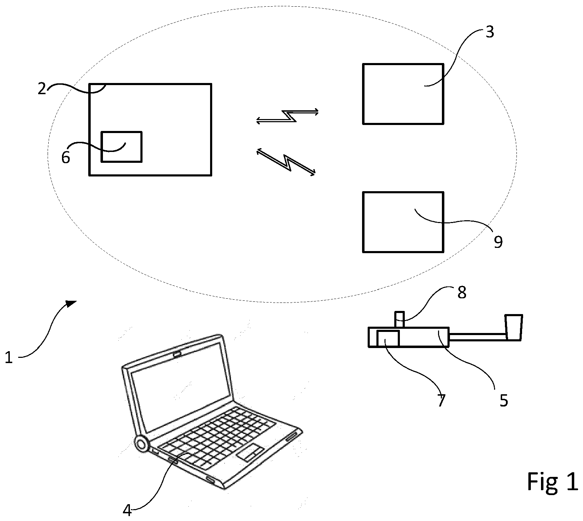

Fig.1 represents a wireless network 1, which contains a first device 2 and another device 3. The first device 2 may have a central function and be like an Access Point (AP), a hub or a gateway device. The first device 2 will henceforth be referred to as an AP for simplicity though other types of device are indeed possible. The user (not shown) wishes to add two more devices to the network 1, namely a complex device 4 (here represented as a computer) and a simple device 5 (here represented as a toothbrush). Devices like the simple device 5 often do not have any real user interface (UI) other than perhaps a light and, accordingly, are often called 'headless' devices. The AP 2 has a processor 6 and the simple device 5 has a microcontroller and small non-volatile memory 7 and a button 8, which may be used to reset the simple device 5. There is also a third device 9.

Some wireless networking standards allow for one device to configure another in order to establish a connection and communicate. This makes the task of adding, or enrolling, a new device in a network less onerous in that the user no longer has to make manual entries.

Diffie-Hellman, see reference document [DH], is a well-known technique for establishing a secret key between two parties, where the communication between the parties for establishing the secret key does not reveal any information to third parties on the established secret key. The two parties each use their own public/private key pair and exchange the public key with each other. Each party is able to compute the secret key using its own private key and the other party's public key and possibly some other information, e.g. a nonce (random number) from each party. Each party may generate a key pair anew each time it performs Diffie-Hellman or it reuses an older key pair.

Commissioning protocols such as the Device Provisioning Protocol (DPP) of the Wi-Fi Alliance, see reference document [DPP], uses Diffie-Hellman to establish a secret key between two devices, the DPP Enrollee that wants to be configured and the DPP Configurator that is able to configure DPP Enrollees, so these can get access to a DPP enabled network or can set up a DPP enabled network as an Access Point (AP), see reference document [802.11].

When performing Diffie-Hellman over a network, a device that receives a public key for performing Diffie-Hellman does not know from which device this public key is. This may be exploited by an attacker in a so-called man-in-the-middle attack. An attacker E might masquerade as the real device B with which device A wants to connect. The attacker E performs Diffie-Hellman with device A and establishes a secret key Kae with device A. Similarly, the attacker masquerades as device A to device B and establishes a secret key Kbe with device B. When a message comes in from one of the devices A or B, the attacker decrypts the message with the one secret key, encrypts it with the other and forwards it to the other device. This way, the devices A and B do not notice anything strange in their communication, except for some extra delay. When they check their communication by sending the same information using another way of communication and comparing the results, they will not notice any tampering with their communication. But the attacker has complete knowledge on what they communicate.

### SUMMARY OF THE INVENTION

It is thus desirable to provide a push-button protocol to address these issues.
Thus there is provided, a method of performing a push-button protocol between a first and a second device, comprises sending, by the first device, a first message after receiving a first button press, listening for a second message until the earlier of either the expiry of a waiting time or the detection of a subsequent button press on the first device, proceeding to a secure phase of the push-button protocol if one or more second messages have been received from only one device and aborting the push-button protocol if no second messages have been received or if second messages have been received from more than one device.

Also there is provided a method of performing a push-button protocol between a first and a second device. The method comprises listening, until the earlier of either the expiry of a waiting time or the detection of a subsequent button press on the first device, for a first messages after receiving a first button press, sending, by the first device, a second message if a first message has been received, proceeding to the secure phase if one or more first messages have been received from only one device , and aborting the push-button protocol if no first messages have been received or if first messages have been received from more than one device.

The extra button press allows improvements in both the security and the reliability of the protocol. This because the waiting time (i.e. the walking time) may be shortened thus limiting the window that rogue devices have to attempt to connect by sending message to or listening for messages from one or both of the two devices the user is actually trying to configure and connect. However the shortening of the walking time is only performed when the user has been able to confirm that this is appropriate so maintaining the good chance the protocol will complete successfully.

In an aspect, the first device may send the first message over more than one channel.

In an aspect, the first device may listens for the first message on more than one channel.

By using multiple channels, the robustness of the protocol is improved.

In an aspect, the first message may be a Push Button Presence Announcement, the second message may be a Push Button Presence Announcement Response and the secure phase of the protocol starts with the PKEX protocol from the Device Provisioning Protocol (DPP).

There is provided a device which is arranged for participating in a push-button protocol. The device comprises a push-button and processor, the processing being arranged to start a waiting time timer after a detection of a first button-press on the push-button, send, by the first device, a first message after the detection of the first button press, listen for a second message until the earlier of either the expiry of the waiting time or the detection of a subsequent button press on the first device, proceed to a secure phase of the push-botton protocol if one or more second messages have been received from only one device, and abort the push-button protocol if no second messages have been received or if second messages have been received from more than one device.

There is also provided a device arranged for participating in a push-button protocol. The device comprises a push-button and processor, the processing being arranged to start a waiting time timer after a detection of a first button-press on the push-button, listen until the earlier of either the expiry of the waiting time or the detection of a subsequent button press on the first device, for a first message after the detection of the first button press, if the first message is received, send a second message, proceed to a secure phase of the push-botton protocol if one or more second messages have been received from only one device, and abort the push-button protocol if no first messages have been received or if first messages have been received from more than one device.

There is also provided a computer program product arranged when run on a processor of a device as described herein causes the processor to execute the methods described herein.

### BRIEF DESCRIPTION OF THE DRAWINGS

The above, as well as additional objects, features and advantages of the disclosed devices, systems and methods, will be better understood through the following illustrative and non-limiting detailed description of embodiments of devices and methods, with reference to the appended drawings, in which:
Fig. 1 represents a wireless network for which it is desired to configure devices for addition.
Fig. 2 represents the flow of a known configuration process.
Fig. 3 represents the flow of a known configuration process according to an embodiment.
Fig. 4 represents a device according to an embodiment.
Fig. 5 represents a storage medium for holding a computer program for executing a process according to an embodiment.

### DETAILED DESCRIPTION OF EMBODIMENTS

In the following description, same references designate like elements.

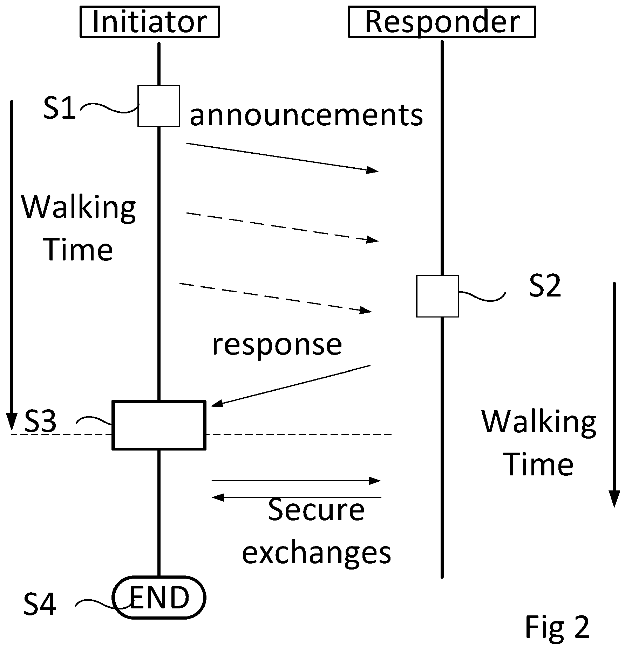

Fig. 2 represents a flow of a device-controlled configuration method according to embodiments whereby one device such as the third device 9 or the AP 2 of fig. 1 may be configured and connect to another device such as the complex or simple devices 4, 5 of fig. 1. The third device 9 of fig. 1 may configure another device such as the complex or simple devices 4, 5 of fig. 1 in order to enable the other device to connect to the AP 2. The third device 9 and the device 4, 5 are according to embodiments. As an example, the case of the simple device 5 will be discussed. It should be understood, that though much of this description provides examples involving a network with a device like the AP 2, the process could work in a peer-to-peer situation.

One way for the user to make sure that a Configurator and Enrollee performing Diffie-Hellman, e.g. at the start of a configuration protocol such as specified in [DPP] or [WPS], are indeed the devices intended by that user is a push-button method as e.g. described in [DPP] section 5.8 "Push-button PKEX-based" or in [WPS] 11 "Pushbutton Configuration".

A push-button protocol is also used in many other networks such as those where devices are paired. Push-button protocols can be summarized as follows. The user wants two wireless devices to engage securely in a protocol, e.g. a protocol where one of the devices, the Configurator, configures the other device, the Enrollee, e.g. for being able to access a certain network. Where the object is pairing, the process is similar in the important aspects.

At S1, the user presses a button, the first button press, on one of these devices, the first device. At this point, it does not matter whether the first device is the Configurator or the Enrollee. Depending on the specifics of the particular push-button protocol, the first device either starts listening for first push-button messages that another device wants to engage in performing the push-button protocol or it starts sending first push-button messages that it wants to engage in the performing the push-button protocol. In figure 2, the case where the first device sends messages is shown for simplicity. The first device does this only for a specific amount of time, the walking time. At S2, the user presses the button on the second device - the second button press. The two devices may be located relatively far apart in a house, e.g. one device, a Wi-Fi Access Point (AP) with Configurator functionality in the basement and a smart water heater in the attic that uses Wi-Fi for connection to the electricity utility company, hence the name "walking time". Because of this distance, the walk time in WPS is set to 120 seconds and in DPP, where it is called first listening period, to 100 seconds.

The second device, after the second button press and depending on the specifics of the particular push-button protocol, either starts sending first push-button messages that it wants to engage in the performing the push-button protocol or it starts listening for first push-button messages that another device wants to engage in performing the push-button protocol. The second device will also only do this for a specific amount of time, which may be the same as the walking time of the first device or a different walking time.

The device that starts sending first push-button messages is herein called the initiator and the device that start listening for first push-button messages the responder. The initiator can be the first or the second device and the responder the second or first device.

In [DPP], the first message is the Push-button Presence Announcement, the second message is the Push-button Presence Announcement Response, the device that is herein termed the initiator is called the Enrollee in [DPP] and the responder is called the Configurator in [DPP].

In [WPS], the first message is a probe request with a Device Password ID and a WSC IE (Wi-Fi Simple Configuration Information Element), see e.g. [WPS] section 11.3, the second message is a probe response indicating a Selected Registrar (WPS name for configurator) with a PBC (Pushbutton configuration) Device Password ID and a WSC IE, see [WPS] section 11.3), what we call initiator in this application is called the Enrollee in [WPS] and what we call responder in this application is called the Registrar in [DPP]. The Registrar can be regarded as a configurator and is usually located in a Wi-Fi AP.

Depending on the specific of the particular push-button protocol, the initiator cycles through all channels it supports for sending the first message, while the responder listens on one channel, or the responder cycles through all channels it supports for listening to first messages, while the initiator sends first messages on one channel.

In [DPP] and [WPS], the initiator cycles though all channels, while the responder listens on one channel.

First messages may be sent to the broadcast address if the responder device is unknown as is the case for [DPP]. In [WPS], an Enrollee, so an initiator, may find out which Registrars are active by inspecting whether the beacon signals of APs supporting a Registrar incorporate a Selected Registrar flag set to TRUE.

When a responder did not receive any first message in the walking time, it aborts the push-button protocol and that protocol run has failed. When a responder has received first messages from more than one device within the walking time, it aborts the push-button protocol and that protocol run has failed. That is because in the latter case, there are two or more potential candidates to engage the protocol further with, but the responder does not know which of these is the intended one. We will call the intended one the intended initiator and the other initiator(s) the rogue initiator(s). Only if the responder receives first messages from one initiator, it proceeds with the protocol.

The responder, when having received a first message, will respond with a second message. When exactly that happens depends on the particular push-button protocol. It may e.g. be immediately after reception or after having cycled through all channels and detecting no rogue initiator.

Similarly to the responder case described above, when an initiator did not receive any second message in the walking time, it aborts the push-button protocol and that protocol run has failed. When an initiator has received second messages from more than one device within the walking time, it aborts the push-button protocol and that protocol run has failed. That is because in the latter case, there are two or more potential candidates to engage the protocol further with, but the initiator does not know which of these is the intended one. We will call the intended one the intended responder and the other responder(s) the rogue responder(s). Only if the initiator receives second messages from one responder, it proceeds with the protocol.

The push-button protocol, or just the protocol in short, that is described above consists of two phases. The phase in which first and second messages are exchanged can be called the discovery phase of the protocol. This completes at S3. After the discovery phase has passed with success, the secure phase of the protocol starts, in which the two devices can securely engage in a further protocol, e.g. a bootstrapping protocol like the PKEX protocol in [DPP] or a configuration protocol like all messages starting from "Authentication Request" up to and including "EAP-Response (Done)" in figure 18 - PBC message exchange of [WSC]. This part ends at S4 (END). This process is represented in figure 2 by the 'secure exchanges'.

The problem, of the push-button protocols as described above is that they take at least the walking time, so about two minutes to finish. That is a very long waiting time for the user, especially if both devices are within reach of the user and their buttons can be pressed within seconds of each other. On the other hand, the walking time has to be long enough to allow the user to pass between the devices in most situations. During this time, the devices are open to attack. Thus, the process has disadvantages.

The discovery phase of the protocol could be shortened by having the responder reply immediately to the first received first message or at the latest after having gone through all channels it supports one more time and then considers its walking time over and proceeds to the secure phase of the protocol if it has not received first messages from more than one device. This could be enhanced by requiring the initiator and/or the responder to listen for second respectively first messages before their button is pressed and keeping a list of these messages that goes back for e.g. at least the walking time. However, the inventor has realised that there are disadvantages with this solution is that in the case of a responder receiving a first message, the responder does not know if this first message is from the intended device or from a rogue device. Also, it may be the case that if the responder proceeds and finishes with the secure phase of the protocol before the walking time is really over, the user has performed the first button press on the responder and is still "walking" to the initiator, the intended initiator, to perform the second button press. Also, a precipitous termination of the discovery phase could occur as a result of the reception of a message from another (possibly rogue) device without the responder commencing the secure phase. In either case, any message from the intended initiator will arrive too late at the responder, with the consequence that the protocol is aborted unnecessarily.

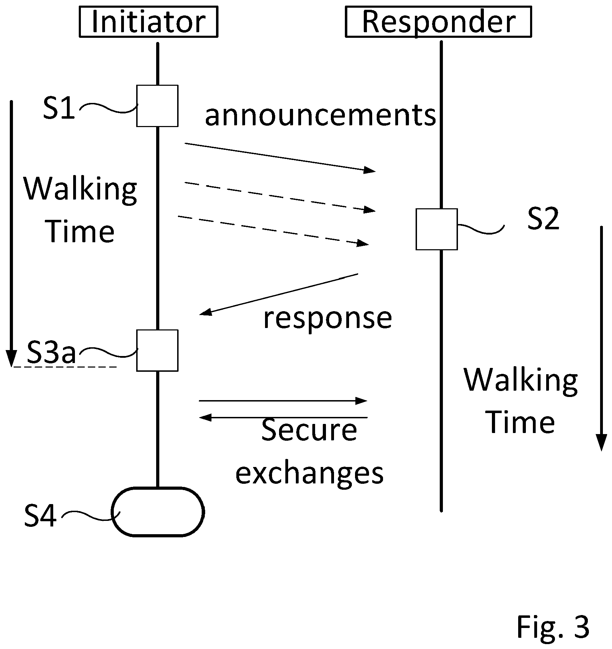

Figure 3 represents a flow according to and embodiment. The flow resembles that of figure 2 and like elements are not described again. The user, after the second button press, i.e. after the user has pressed the button on the second device, returns to the first device and presses its button a second time at S3a. This button press is called the third button press. In contrast to what is specified in [WSC], this third button press signifies that the walking time is over for the first device and the first device may proceed with the secure phase of the protocol i.e. continue to S4. Optionally, the user presses the button a second time on the second device, which we call the fourth button press, signalling to the second device that its walking time is over.

Note that in [WPS], the third or fourth button press on a device indicates the device to start the push button protocol anew, which is a very different action than the one described herein.

Similarly if the user has performed a button press on the initiator and the initiator is allowed to proceed with the secure phase of the protocol when receiving a second message before its walking time is over, relying only on not having received any second messages from another device in a time period before its button was pressed, it does not know whether the received second message is from the intended device or a rogue device. It may be the case that if the initiator proceeds and finishes with the secure phase of the protocol before the walking time is really over, the user has performed the first button press on the initiator and is still "walking" to the responder, the intended responder, to perform the second button press. Any message from the intended initiator will arrive too late at the responder.

In case the first device (responder or initiator) receives the third button press from the user, the first device knows that the second device has had time to send a first (if the second device is an initiator) or second message (if the second device is a responder). Optionally to increase the certainty of this determination, the first device, after the third button press, cycles through all channels it supports before proceeding to the secure phase of the protocol in case it has not received first or second messages from more than one device from at the latest the first button press. The first device may still proceed with the secure phase of the protocol if the walking time is over even if it did not receive a third button press.

The advantage is that having received the third button press, the first device can proceed quicker than the walking time to the secure phase of the protocol, while being certain that it is engaging with the intended second device and not some other (potentially malicious) rogue device. Another advantage is that by only shortening the walking time by a positive action on the part of the user, as opposed to allowing the devices to decide this, allows time for the user to actually press the buttons on the respective devices.

The second device, after the second button press receiving a first message (when it is a responder) or a second message (when it is an initiator) is, however, not able to proceed to the secure phase of the protocol on the basis that it knows for sure that that message is from the intended first device. It may be considered sufficient that the first device is ready to start the second phase of the protocol and that the second device does not know for sure yet does not matter. However, it may be advantageous to add, optionally, yet another button press. If the user presses the button of the second time on the second device, i.e. a fourth button press, after the third button press on the first device, the second device also knows that the first device has had time to send its first or second message. This fourth button press is not shown on figure 3. In the case where the fourth button press is used, this fourth button press would trigger the start of the second phase rather than the third button press as S3a.

Optionally to increase the certainty of this determination, the second device, after the fourth button press, cycles through all channels it supports before proceeding to the secure phase of the protocol in case it has not received first (if it is a responder) or second (if it is an initiator) messages from more than one device from at the latest the second button press. In any case, the second device can proceed with the secure phase of the protocol if the walking time is over and it did not receive a fourth button press.

At first sight, this appears counterintuitive in that it may be seen as a burden to the user if the user has to go to the second device to perform the second button press, go back to the first device for the third button press and go to the second device again for the fourth button press. However, the user does not have to perform the fourth or third and fourth button press if the distance between the two devices is such that going back and forth between them is more than the walking time of the protocol, because the protocol finishes before the user can do a third or fourth button press. However, the third and fourth button press will not present a burden to the user if the devices are close together while the time to perform the protocol will be considerable shorter than the walking time in this case, which is an advantage to the user. Furthermore, even if the user must change location to execute the third and, possibly, fourth button presses, the added security and reliability of the protocol may justify this extra burden.

It should be understood that though the examples used in this description of a push-button protocol are using Wi-Fi, a push-button protocol and the improvement proposed in this application may use any wireless technology such as Bluetooth [BT], ZigBee, etc.

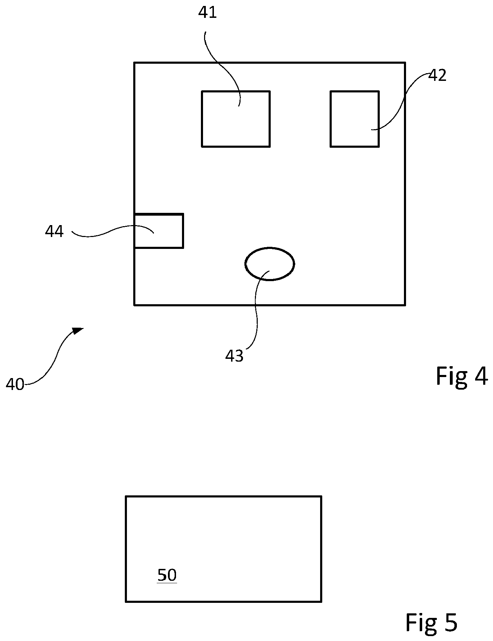

Figure 4 represents a device according to an embodiment. The device 40 has a processor 41, an optional transceiver 42 and push-button 43 and an optional input/output port 44. The device 40 may also have a storage unit (not shown) for storing computer program code. The input/output port 44 may be of use in connecting the device to an external transceiver where the transceiver 42 is not physically present in the device 40. The transceiver is arranged to send and receive messages according to the wireless technology concerned.

Figure 5 represents a storage medium 50 for holding computer code which, when installed on the device 40, causes the device 40 to be able to execute the methods according to embodiments. The storage medium 50 may be part of the device 40 or a separate storage such as a data carrier or even a remote server.

In summary, the method of performing a push-button protocol between a first and a second device, comprises sending, by the first device, a first message after receiving a first button press, listening for a second message until the earlier of either the expiry of a waiting time or the detection of a subsequent button press on the first device, proceeding to a secure phase of the push-button protocol if one or more second messages have been received from only one device and aborting the push-button protocol if no second messages have been received or if second messages have been received from more than one device.

Also there is a method of performing a push-button protocol between a first and a second device. The method comprises listening, until the earlier of either the expiry of a waiting time or the detection of a subsequent button press on the first device, for a first messages after receiving a first button press, sending, by the first device, a second message if a first message has been received, proceeding to the secure phase if one or more first messages have been received from only one device , and aborting the push-button protocol if no first messages have been received or if first messages have been received from more than one device.

The extra button press allows improvements in both the security and the reliability of the protocol. This because the waiting time (i.e. the walking time) may be shortened thus limiting the window that rogue devices have to attempt to connect by sending message to or listening for messages from one or both of the two devices the user is actually trying to configure and connect. However the shortening of the walking time is only performed when the user has been able to confirm that this is appropriate so maintaining the good chance the protocol will complete successfully.

The first device may send the first message over more than one channel.

The first device may listens for the first message on more than one channel.

By using multiple channels, the robustness of the protocol is improved.

The first message may be a Push Button Presence Announcement, the second message may be a Push Button Presence Announcement Response and the secure phase of the protocol starts with the PKEX protocol from the Device Provisioning Protocol (DPP).

There is a device which is arranged for participating in a push-button protocol. The device comprises a push-button and processor, the processing being arranged to start a waiting time timer after a detection of a first button-press on the push-button, send, by the first device, a first message after the detection of the first button press, listen for a second message until the earlier of either the expiry of the waiting time or the detection of a subsequent button press on the first device, proceed to a secure phase of the push-botton protocol if one or more second messages have been received from only one device, and abort the push-button protocol if no second messages have been received or if second messages have been received from more than one device.

There is also a device arranged for participating in a push-button protocol. The device comprises a push-button and processor, the processing being arranged to start a waiting time timer after a detection of a first button-press on the push-button, listen until the earlier of either the expiry of the waiting time or the detection of a subsequent button press on the first device, for a first message after the detection of the first button press, if the first message is received, send a second message, proceed to a secure phase of the push-botton protocol if one or more second messages have been received from only one device, and abort the push-button protocol if no first messages have been received or if first messages have been received from more than one device.

There is also provided a computer program product arranged when run on a processor of a device as described herein causes the processor to execute the methods described herein.

Aspects of the embodiments may be implemented in a computer program product, which may be a collection of computer program instructions stored on a computer readable storage device which may be executed by a computer. The instructions may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors.

Storage media suitable for storing computer program instructions include all forms of nonvolatile memory, including but not limited to EPROM, EEPROM and flash memory devices, magnetic disks such as the internal and external hard disk drives, removable disks and CD-ROM disks. The computer program product may be distributed on such a storage medium, or may be offered for download through HTTP, FTP, email or through a server connected to a network such as the Internet.

The following may be used as reference documents:
[802.11] IEEE Computer Society, "IEEE Standard for Information Technology-Telecommunications and Information Exchange Between Systems - Local and Metropolitan Area Networks - Specific requirements Part 11: Wireless LAN Medium Access Control (MAC) and Physical Layer (PHY) Specifications," (IEEE Std. 802.11-2016), December 2016.
[BT] Bluetooth Core Specification, v5.0, https://www.bluetooth.com/specifications/bluetooth-core-specification/bluetooth5, December 2016.
[DH] Diffie, W.; Hellman, M. (1976), "New directions in cryptography", IEEE Transactions on Information Theory, 22 (6): 644-654
[DPP] Proposal to add Push Button bootstrapping to Device Provisioning Protocol - Technical Specification - Version 2.0.0.6, Wi-Fi Alliance, 2022, https://groups.wi-fi.org/apps/org/workgroup/wfa-wifieasyconnect-tg/download.php/119571/Wi-Fi_Easy_Connect_Specification_v2.0%200.6_PB4.docx.

## Claims

1. A method of performing a push-button protocol between a first and a second device, the method comprising
- sending, by the first device, a first message after receiving a first button press;
- listening for a second message until the earlier of either the expiry of a waiting time or the detection of a subsequent button press on the first device ;
- proceeding to a secure phase of the push-botton protocol if one or more second messages have been received from only one device, and
- aborting the push-button protocol if no second messages have been received or if second messages have been received from more than one device.

2. A method of performing a push-button protocol between a first and a second device, the method comprising
- listening for a first messages after receiving a first button press and until the earlier of either the expiry of a waiting time or the detection of a subsequent button press on the first device;
- sending, by the first device, a second message if a first message has been received;
- proceeding to the secure phase if one or more first messages have been received from only one device, and
- aborting the push-button protocol if no first messages have been received or if first messages have been received from more than one device.

3. The method of claim 1, where the first device sends first messages over more than one channel.

4. The method of claim 2, where the first device listens for first messages on more than one channel.

5. The method of claim 1 to 4, where the first message is a Push Button Presence Announcement, the second message is a Push Button Presence Announcement Response and the secure phase of the protocol starts with the PKEX protocol from the Device Provisioning Protocol (DPP).

6. A device arranged for participating in a push-button protocol, the device comprising a push-button and processor, the processing being arranged to
- start a waiting time timer after a detection of a first button-press on the push-button;
- send, by the first device, a first message after the detection of the first button press;
- listen for a second message until the earlier of either the expiry of the waiting time or the detection of a subsequent button press on the first device;
- proceed to a secure phase of the push-botton protocol if one or more second messages have been received from only one device, and
- abort the push-button protocol if no second messages have been received or if second messages have been received from more than one device.

7. A device arranged for participating in a push-button protocol, the device comprising a push-button and processor, the processing being arranged to
- start a waiting time timer after a detection of a first button-press on the push-button;
- listen for a first message after the detection of the first button press and until the earlier of either the expiry of the waiting time or the detection of a subsequent button press on the first device;
- if the first message is received, send a second message;
- proceed to a secure phase of the push-botton protocol if one or more first messages have been received from only one device, and
- abort the push-button protocol if no first messages have been received or if first messages have been received from more than one device.

8. The device of either of claims 6 or 7, where the first device sends first messages over more than one channel.

9. The device of claim 8, where the first device listens for first messages on more than one channel.

10. The device of any of claims 6 to 9, where the first message is a Push Button Presence Announcement, the second message is a Push Button Presence Announcement Response and the secure phase of the protocol starts with the PKEX protocol from the Device Provisioning Protocol (DPP).

11. A computer program product arranged when run on a processor of a device according to any of claims 6-10 causes the processor to execute the method of any of claims 1-5.
